# EUROPÄISCHE PATENTSCHRIFT

(11) **EP 0 940 451 B1**
(45) Veröffentlichungstag und Bekanntmachung des Hinweises auf die Patenterteilung: **06.11.2002**
(21) Anmeldenummer: 99103867.0
(22) Anmeldetag: 01.03.1999
(51) Int. Cl.: C09C 1/00

(54) **Goniochromatische Glanzpigmente auf Basis mehrfach beschichteter Eisenoxidplättchen**
Brilliant goniochromatic pigments based on iron oxide platelets bearing multiple coatings
Pigments brilliants goniochromatiques à base d'oxyde de fer sous forme de plaquettes portant des couches multiples

(30) Priorität: 02.03.1998 DE 19808657
(43) Veröffentlichungstag der Anmeldung: 08.09.1999
(73) Patentinhaber: BASF AKTIENGESELLSCHAFT, 67056 Ludwigshafen (DE)
(72) Erfinder: Schmid, Raimund, Dr., 67435 Neustadt (DE); Seeger, Oliver, Dr., 68163 Mannheim (DE); Mronga, Norbert, Dr., 69221 Dossenheim (DE)

(56) Entgegenhaltungen:
- EP-A- 0 753 545
- US-A- 3 869 298

## Beschreibung

Die vorliegende Erfindung betrifft neue goniochromatische Glanzpigmente auf der Basis von mehrfach beschichteten Eisenoxidplättchen, die mindestens ein Schichtpaket aus
A) einer farblosen Beschichtung mit einem Brechungsindex n ≤ 1,8 und
B) einer auf die Beschichtung (A) folgenden farblosen Beschichtung mit einem Brechungsindex n ≥ 2,0
aufweisen.

Weiterhin betrifft die Erfindung die Herstellung dieser Glanzpigmente sowie ihre Verwendung zum Einfärben von Lacken, Druckfarben, Tinten, Kunststoffen, Gläsern, keramischen Produkten und Zubereitungen der dekorativen Kosmetik.

Glanz- oder Effektpigmente werden in vielen Bereichen der Technik eingesetzt, beispielsweise in Automobillacken, in der dekorativen Beschichtung, der Kunststoffeinfärbung, in Anstrichfarben, Druckfarben, insbesondere Sicherheitsdruckfarben, sowie in der Kosmetik.

Ihre optische Wirkung beruht auf der gerichteten Reflexion von Licht an überwiegend flächig ausgebildeten, zueinander parallel ausgerichteten, metallischen oder stark lichtbrechenden Pigmentteilchen. Je nach Zusammensetzung der Pigmentplättchen erzeugen Interferenz-, Reflexions- und Absorptionsphänomene winkelabhängige Farb- und Helligkeitseindrücke.

Aufgrund ihrer nichtkopierbaren optischen Effekte gewinnen diese Pigmente auch zunehmende Bedeutung für die Herstellung von fälschungssicheren Wertschriften, wie Geldscheinen, Schecks, Scheckkarten, Kreditkarten, Steuermarken, Briefmarken, Bahn- und Flugtickets, Telefonkarten, Lotterielosen, Geschenkzertifikaten, Ausweisen und Identifikationskarten.

Kennzeichnungen, die mit den Effektpigmenten angefertigt wurden, und das Fehlen dieser Kennzeichnungen oder ihre Veränderung, beispielsweise in einer Farbkopie (Verschwinden von Farbflops und Glanzeffekten), sind ohne Hilfsmittel mit bloßem Auge sicher erkernbar und ermöglichen so eine leichte Unterscheidung des Originals von der Kopie.

Von besonderem Interesse sind goniochromatische Glanzpigmente, die einen winkelabhängigen Farbwechsel zwischen mehreren intensiven Interferenzfarben und damit ein attraktives Farbenspiel zeigen.

Bislang sind eine Reihe von goniochromatischen Glanzpigmenten auf metallischer Basis bekannt, die über physikalische Aufdampftechniken (US-A-3 438 796 und 5 135 812) oder durch Beschichtung von Metallplättchen mittels Gasphasenzersetzung flüchtiger Precursor (CVD = Chemical Vapor Deposition) oder durch naßchemische Beschichtung der Metallplättchen (EP-A-668 329, EP-A-708 154 und WO-A-96/34917) hergestellt werden.

Goniochromatische Glanzpigmente auf Basis transparenter, silikatischer Substrate oder beschichteter Eisen(III)oxidplättchen sind in der DE-A-196 18 569 bzw. der EP-A-753 545 beschrieben.

Die bekannten Glanzpigmente unterscheiden sich vor den erfindungsgemäßen Pigmenten durch die Art des Substratmaterials und/oder der aufgebrachten Beschichtungen.

Der Erfindung lag die Aufgabe zugrunde, weitere goniochromatische Glanzpigmente bereitzustellen, die sich durch vorteilhafte Anwendungseigenschaften auszeichnen.

Demgemäß wurden die eingangs definierten goniochromatischen Glanzpigmente gefunden.

Weiterhin wurde ein Verfahren zur Herstellung dieser Glanzpigmente gefunden, welches dadurch gekennzeichnet ist, daß man die Beschichtungen (A) und (B) unabhängig voneinander entweder naßchemisch durcn hydrolytische Zersetzung organischer oder anorganischer Metallverbindungen oder durch Gasphasenzersetzung flüchtiger organischer oder anorganischer Metallverbindungen auf die Eisen-oxidplättchen aufbringt.

Außerdem wurde ein Verfahren zur Herstellung erfindungsgemäßer Glanzpigmente auf Basis von Magnetitplättchen gefunden, welches dadurch gekennzeichnet ist, daß man
a) Eisen(III)oxidplättchen zunächst mit den Beschichtungen (A) und (B) belegt und die beschichteten Pläctchen anschließend bei 150 bis 600°C mit Wasserstoff behandelt oder
b) die Eisen(III)oxidplättchen zunächst bei 150 bis 600°C mit einem reduzierenden Gas behandelt und die erhaltenen Magnetitplättchen anschließend mit den Beschichtungen (A) und (B) belegt.

Schließlich wurde die Verwendung der erfindungsgemäßen Glanzpigmente zur Einfärbung von Lacken, Druckfarben, Tinten, Kunststoffen, Gläsern, keramischen Produkten und Zubereitungen der dekorativen Kosmetik gefunden.

Die erfindungsgemäßen goniochromatischen Glanzpigmente basieren auf mehrfach beschichteten Eisenoxidplättchen.

Beispiele für bevorzugte Substratmaterialien sind dabei plattchenförmiges α-Eisen(III)oxid (α-Fe₂O₃, Hämatit), das mit Silicium (EP-A-14 382), Aluminium (EP-A-68 311) oder Aluminium und Mangan (EP-A-265 820) dotiert sein kann, und plättchenförmiges Eisen(II/III)oxid (Fe₃O₄, Magnetit), das ebenfalls mit den genannten Metallen dotiert sein kann.

Die erfindungsgemäßen Eisenoxidplättchen sind hochbrechend. Ihr Brechungsindex n beträgt in der Regel ≥ 2,0, vorzugsweise ≥ 2,4. Die gegebenenfalls dotierten Eisen(III)oxidplättchen sind für sichtbares Licht in Abhängigkeit von der betrachteten Wellenlänge im wesentlichen durchlässig bis nahezu undurchlässig, während die Magnetitplättchen im wesentlichen opak sind.

Die Größe der Eisenoxidplättchen ist an sich nicht kritisch und kann auf den jeweiligen Anwendungszweck abgestimmt werden. In der Regel haben die Plättchen mittlere größte Durchmesser von etwa 1 bis 50 µm, vorzugsweise 5 bis 20 µm. Die Dicke der Plättchen beträgt im allgemeinen 0,1 bis 1 µm, bevorzugt um etwa 0,3 µm. Ihre spezifische freie Oberfläche (BET) liegt üblicherweise bei 0,5 bis 15 m²/g, insbesondere 1 bis 12 m²/g.

Die erfindungsgemäßen Glanzpigmente weisen eine farblose niedrigbrechende Beschichtung (A) in Kombination mit einer farblosen hochbrechenden Beschichtung (B) auf. Sie können mehrere gleiche oder verschiedene Kombinationen (Schichtpakete) (A) + (B) enthalten, bevorzugt ist aber die Belegung mit nur einem Schichtpaket (A) + (B).

Die farblose niedrigbrechende Beschichtung (A) hat einen Brechungsindex n ≤ 1,8, vorzugsweise ≤ 1,6, und im sichtbaren Wellenlängenbereich eine Absorptionskonstante k = 0.

Als Schichtmaterial (A) eignen sich alle niedrigbrechenden farblosen Substanzen, die filmartig und dauerhaft auf die Eisenoxidplättchen aufgebracht werden können, wobei anorganische Materialien bevorzugt sind.

Besonders geeignet sind z.B. Metalloxide und Metalloxidhydrate wie Siliciumoxid, Siliciumoxidhydrat, Aluminiumoxid, Aluminiumoxidhydrat und deren Mischungen, wobei Siliciumoxid(hydrat) bevorzugt ist.

Die geometrische Schichtdicke der Beschichtung (A) beträgt im allgemeinen 50 bis 800 nm, vorzugsweise 100 bis 600 nm. Da die Schicht (A) im wesentlichen die Interferenzfarben der erfindungsgemäßen Pigmente bestimmt, hat sie für ein besonders ausgeprägtes Farbenspiel zeigende und daher auch bevorzugte Glanzpigmente, die nur ein Schichtpaket (A) + (B) aufweisen, eine Mindestschichtdicke von etwa 200 nm. Sind mehrere (z.B. 2, 3 oder 4) Schichtpakete (A) + (B) vorhanden, dann liegt die Schichtdicke von (A) bevorzugt bei 50 bis 200 nm.

Mit wachsender Schichtdicke von (A) sind beim trockenen Pigmentpulver in der Aufsicht mehrmals nacheinander die Interferenzfarben Blau-Grün-Gold-Rot-Violett zu beobachten, wobei beginnend mit dem Blau zweiter Ordnung die Winkelabhängigkeit des Farbtons zunimmt. Die Interferenzfarben sind jedoch nur im trockenen Zustand sichtbar und verschwinden im feuchten Zustand oder im Lack vollständig. Durch die zusätzliche Beschichtung mit (B) wird die optisch variable Schicht auch in Lacken sichtbar.

Die farblose hochbrechende Beschichtung (B) hat einen Brechungsindex n ≥ 2,0, insbesondere ≥ 2,4, und im sichtbaren Wellenlängenbereich eine Absorptionskonstante k = 0.

Als Schichtmaterial (B) sind alle hochbrechenden farblosen Substanzen, die filmartig und dauerhaft auf die mit (A) belegten Eisenoxidplättchen aufgebracht werden können, geeignet.

Besonders geeignet sind neben Metallsulfiden wie Zinksulfid auch hier vor allem Metalloxide und Metalloxidhydrate, z.B. Titandioxid, Titanoxidhydrat, Zirkoniumdioxid, Zirkoniumoxidhydrat, Zinndioxid, Zinnoxidhydrat, Zinkoxid, Zinkoxidhydrat und deren Mischungen, wobei Titandioxid und Titanoxidhydrat und deren Mischungen mit bis zu etwa 5 Gew.-% der anderen Metalloxide, insbesondere Zinndioxid, bevorzugt sind. Titandioxid kann auch zusammen mit niedrigbrechenden farblosen Metalloxiden verwendet werden, wenn der Brechungsindex dieser Mischungen ≥ 2,0 ist.

Die Beschichtung (B) hat vorzugsweise eine niedrigere Schichtdicke als die Beschichtung (A). Bevorzugte geometrische Schichtdicken liegen für die Beschichtung (B) bei etwa 5 bis 50 nm, insbesondere bei 10 bis 40 nm.

Die erfindungsgemäß bevorzugte, im wesentlichen aus Titandioxid bestehende Beschichtung (B) hat vorzugsweise eine optische Schichtdicke von ≤ 100 nm, ist also für sich genommen silbrig und zeigt noch keine Interferenzeffekte.

Die erfindungsgemäßen Glanzpigmente zeichnen sich durch gutes Deckvermögen, hohe Helligkeitswerte, kräftige und extrem winkelabhängige Interferenzfarben und "seidenweiches Ausehen" in applizierter Form sowie den gleichmäßigen, homogenen und filmartigen Aufbau ihrer interferenzfähigen Beschichtung aus. Erfindungsgemäße Glanzpigmente auf Basis von Eisen(III)oxidplättchen ergeben besonders kräftige Rot- und Goldtöne, kräftige Blau- und Grüntöne sind insbesondere auf Basis von Magnetitplättchen zu erhalten.

Bei dem erfindungsgemäßen Verfahren zur Herstellung der Glanzpigmente werden die Beschichtungen (A) und (B) unabhängig voneinander entweder naßchemisch durch hydrolytische Zersetzung organischer oder anorganischer Metallsalze oder durch Gasphasenzersetzung (CVD) geeigneter flüchtiger Metallverbindungen aufgebracht.

Selbstverständlich können beide Vorgehensweisen beliebig zur Herstellung der einzelnen Schichten kombiniert werden. Werden beide Beschichtungen naßchemisch aufgebracht, so erübrigt sich die Zwischentrocknung der mit (A) beschichteten Eisenoxidplättchen; wird das gleiche Reaktionsmedium verwendet, so kann ebenfalls die Zwischenisolierung entfallen. Entsprechend ist die Zwischenisolierung üblicherweise auch bei der Durchführung beider Beschichtungsschritte nach dem CVD-Verfahren nicht erforderlich.

Zur Erzeugung der Silicium- und/oder Aluminiumoxid(hydrat)schichten (A) sind der naßchemische und der CVD-Herstellungsweg gleichermaßen geeignet.

3ei der naßchemischen Variance kann vorteilhaft gemäß dem in der EP-A-668 329 beschriebenen Verfahren vorgegangen werden, bei dem organische Silicium- und/oder Aluminiumverbindungen, bei welchen die organischen Reste über Sauerstoffatome an die Metalle gebunden sind, in Gegenwart der Eisenoxidplättchen und eines organischen Lösungsmittels, in welchem die Metallverbindungen löslich sind und welches mit Wasser mischbar ist, hydrolysiert werden.

Die bevorzugte Ausführungsform besteht dabei in der Hydrolyse der Metallalkoholate (insbesondere Tetraethoxysilan und Aluminiumtriisopropanolat) in Gegenwart eines Alkohols (insbesondere Isopropanol) und von wäßrigem Ammoniak als Katalysator.

Verfahrenstechnisch geht man gemäß dem in der EP-A-668 329 beschriebenen Verfahren vorzugsweise so vor, daß man Eisenoxidplättchen, Isopropanol, Wasser und Ammoniak vorlegt, diese Mischung unter Rühren auf 40 bis 80°C, insbesondere 60 bis 70°C, erhitzt und eine Lösung des Metallalkoholats in Isopropanol kontinuierlich zudosiert. Nach einer Nachrührzeit von meist etwa 1 bis 15 h kühlt man die Mischung auf Raumtemperatur ab und isoliert das beschichtete Pigment durch Abfiltrieren und Trocknen.

Siliciumoxid(hydrat)beschichtungen (A) können vorteilhaft auch ausgehend von Alkalimetallsilikaten, insbesondere von Natronwasserglas, erzeugt werden.

Man geht dabei zweckmäßigerweise so vor, daß man die Eisenoxidplättchen in Wasser suspendiert, die Suspension auf etwa 20 bis 100°C, bevorzugt 40 bis 80°C, erhitzt, mit einer Base (insbesondere einer Alkalimetallhydroxidlösung wie Kalilauge oder Natronlauge) oder einer Säure (z.B. Salpetersäure) einen pH-Wert von in der Regel 4 bis 9, vorzugsweise 6,5 bis 8,5, insbesondere etwa 7,5, einstellt und die Alkalimetallsilikatlösung unter gleichzeitiger Zugabe einer wäßrigen anorganischen Säure wie Salzsäure, insbesondere einer verdünnten Salzsäure, zur Konstanthaltung des pH-Wertes zudosiert. Gegebenenfalls rührt man wenige min bis zu 2 h nach.

Bei der CVD-Variante kann man gemäß dem in der EP-A-708 154 beschriebenen Verfahren vorgehen. Hierbei werden Silane, die mindestens einen Alkanoyloxyrest enthalten, in der Gasphase mit Wasserdampf und, wenn die Silane auch Alkyl- oder Phenylreste aufweisen, Sauerstoff in Gegenwart der verwirbelten Eisenoxidplättchen zersetzt.

Bevorzugte Silane weisen dabei Alkoxy- und Alkanoyloxyreste auf, besonders bevorzugt ist Di-tert.-butoxydiacetoxysilan.

Zur Durchführung der CVD-Variante empfiehlt sich wie allgemein für CVD-Verfahren üblich die Verwendung eines Wirbelschichtreaktors. Die Eisenoxidplättchen werden im Reaktor unter Fluidisierung (Verwirbelung) mit einem inerten Wirbelgas wie Stickstoff auf die gewünschte Reaktionstemperatur (in der Regel 100 bis 600°C, bevorzugt 150 bis 300°C) erhitzt, Silan und Wasserdampf (sowie gegebenenfalls Sauerstoff) werden dann mit Hilfe inerter Trägergasströme (vorteilhaft Teilströmen des Wirbelgases) aus vorgeschalteten Verdampfergefäßen über getrennte Düsen eingeleitet, wobei die Silankonzentration zweckmäßigerweise bei ≤ Vol.-%, vorzugsweise ≤ 2 Vol.-%, bezogen auf die Gesamtgasmenge im Reaktor, gehalten wird. Die Wasserdampfmenge sollte mindestens der stöchiometrisch zur Hydrolyse des Silans erforderlichen Menge entsprechen, vorzuziehen ist jedoch die 10 bis 100fache Menge.

Auch die Abscheidung der Beschichtungen (B) ist sowohl auf dem CVD-Weg als auch naßchemisch möglich.

Für die CVD-Variante eignen sich als Ausgangsverbindungen vor allem Metallalkoholate, Metallhalogenide und Metallorganyle. Bevorzugt sind dabei solche Verbindungen, die bei Temperaturen bis zu 200°C einen ausreichend hohen Dampfdruck haben, um eine einfache Verdampfung möglichst ohne Zersetzung zu gewährleisten.

Bei den Alkoholaten kommen aromatische Alkoholate wie Phenolate und Benzylalkoholate sowie aliphatische, vor allem C₁-C₄-Alkoholate wie n-, iso- und tert.-Butanolate, bevorzugt Methanolate und Ethanolate und insbesondere n-und iso-Propanolate und auch deren Mischungen in Betracht.

Als Metallhalogenide sind die Chloride bevorzugt.

Metallorganyle können z.B. Metallalkyle, insbesondere solche mit bis zu 4 C-Atomen in der Alkylkette, Metallalkenyle, Metallaryle, Metallarylalkyle und Metallalkylalkenyle sein.

Als geeignete Ausgangsverbindungen seien beispielsweise genannt:
- Alkoholate wie Titantetraethanolat, Titantetra-n- und -isopropanolat und insbesondere Mischungen von Titantetraethanolat und Titantetraisopropanolat, vorzugsweise im Molverhältnis von etwa 1:1, die sich durch niedrige Verdampfungstemperaturen (um 120°C) sowie niedrige Zersetzungstemperaturen (Hydrolyse mit Wasserdampf bei etwa 200°C möglich) auszeichnen, sowie Zirkonium-n- und -isopropanolat;
- Halogenide wie Titantetrachlorid, Zirkoniumtetrachlorid und Zinntetrachlorid;
- Organyle wie Zinntetramethyl, Zinntetra-n-butyl und Zinkdiethyl.

Die Zersetzung dieser Metallverbindungen zu sich filmartig auf den mit (A) belegten Eisenoxidplättchen abscheidenden Metalloxidschichten erfolgt zweckmäßigerweise ebenfalls in einem Wirbelschichtreaktor, wobei im Fall der Alkoholate und der Halogenide Wasserdampf und im Fall der Organyle Sauerstoff als zusätzliches Reaktionsgas eingesetzt wird. Geeignete Zersetzungstemperaturen betragen in der Regel 100 bis 600°C, vorzugsweise 150 bis 300°C (Alkoholate), 150 bis 350°C (Halogenide) bzw. 300 bis 500°C (Organyle).

Analog zu den Metalloxid(hydrat)beschichtungen (A) können die Metalloxid(hydrat)schichten (B) ebenfalls naßchemisch durch Hydrolyse von Metallalkoholaten (z.B. von Titanethanolat) in alkoholischem Medium oder vorzugsweise durch Hydrolyse von anorganischen Metallsalzen, insbesondere von Halogeniden, bevorzugt von Chloriden, in wäßriger Suspension aufgebracht werden.

Zur Abscheidung der bevorzugten Titandioxidschichten (B) kann man vorteilhaft so vorgehen, daß man eine wäßrige Suspension der mit (A) belegten Eisenoxidplättchen auf üblicherweise 50 bis 100°C, vorzugsweise 70 bis 80°C, erhitzt, mit einer Base (insbesondere einer Alkalimetallhydroxidlösung wie Kalilauge oder Natronlauge) oder einer Säure einen pH-Wert von in der Regel 0,5 bis 5, bevorzugt 1,5 bis 2,5, insbesondere etwa 2,2, einstellt und eine Titantetrachloridlösung unter gleichzeitiger Basenzugabe zur Konstanthaltung des pH-Wertes zudosiert.

Sowohl das aus der Gasphase als auch das naßchemisch abgeschiedene Titanoxid(hydrat) ist nur unvollständig kristallisiert. Die amorphen Anteile können durch Calcinierung des isolierten (und getrockneten) Pigments in kristalline Form, üblicherweise in die Anatasmodifikation, überführt werden. Dazu erhitzt man das Pigment im allgemeinen etwa 1 bis 4 h auf 400 bis 1000°C. Soll die Titandioxidbeschichtung (3) nach der Calcinierung in der Rutilmodifikation vorliegen, so empfiehlt es sich, das Titanoxid(hydrat) durch gleichzeitiges Abscheiden von Zinnoxid(hydrat) mit etwa 0,5 bis 10 Gew.-% Zinndioxid zu dotieren, welches die Bildung der Rutilmodifikation begünstigt.

Die erfindungsgemäßen Glanzpigmente auf Basis von Magnetitplättchen können vorteilhaft durch nachträgliche Reduktion von mit (A) und (B) beschichteten Eisen(III Eisen(III)oxidplättchen mit Wasserstoff hergestellt werden (Variante a) des ebenfalls erfindungsgemäßen Herstellungsverfahrens).

Geeignete Reduktionstemperaturen liegen hierfür üblicherweise bei 150 bis 600°C, insbesondere bei 200 bis 500°C.

Man kann die auf Magnetit basierenden Glanzpigmente auch herstellen, indem man zunächst Eisen(III)oxidplättchen reduziert und die erhaltenen Magnetitplättchen anschließend mit (A) und (B) beschichtet (Variante b) des erfindungsgemäßen Herstellungsverfahrens.

Die Reduktion der Eisen(III)oxidplättchen wird vorzugsweise mit reduzierenden Gasen wie Wasserstoff vorgenommen, wobei Reduktionstemperaturen von 150 bis 600°C, insbesondere 200 bis 500°C, zweckmäßig sind. Bei Temperaturen ≥ 600°C enthalten die gebildeten Magnetitplättchen zunehmende Anteile an metallischem Eisen. Die erhöhte Magnetisierbarkeit dieser Pigmente kann gezielt als weiteres Sicherheitsmerkmal ausgenutzt werden.

Die Reduktion wird bei beiden Verfahrensvarianten zweckmäßigerweise in einem inertisierbaren Ofen, in dem eine Durchmischung der Substratteilchen möglich ist, durchgeführt. Beispielsweise seien für den Labormaßstab ein Drehkugelofen, d.h. ein Einhalsrundkolben aus Quarzglas, der über einen Motor gedreht wird, mit Gaszu- und -ableitungen in der Drehachse versehen ist und von einem zweischaligen Klappofen beheizt wird, und für eine kontinuierliche Verfahrensführung im technischem Maßstab ein Drehrohrofen mit Einbauten zur Pigmentdurchmischung und Gaszu- und -ableitung genannt.

Mit Hilfe der erfindungsgemäßen Herstellungsverfahren können die mehrfach beschichteten Glanzpigmente in einfacher Weise in großen Mengen reproduzierbar hergestellt werden. Es werden vollständig umhüllte Pigmentteilchen mit hoher Qualität der einzelnen Beschichtungen (homogen, filmartig) erhalten.

Die erfindungsgemäßen Glanzpigmente eignen sich vorteilhaft für viele Zwecke, wie zur Einfärbung von Kunststoffen, Gläsern, keramischen Produkten, Zubereitungen der dekorativen Kosmetik und insbesondere von Lacken, Tinten und Druckfarben, auch Sicherheitsdruckfarben. Bei der Applikation im Druck sind alle industrieüblichen Druckverfahren, z.B. Siebdruck, Tiefdruck, Bronzierdruck, Flexodruck und Offsetdruck, geeignet.

Für diese Anwendungszwecke lassen sich die erfindungsgemäßen Pigmente auch vorteilhaft in Abmischung mit transparenten und deckenden Weiß-, Bunt- und Schwarzpigmenten sowie auch herkömmlichen Glanzpigmenten auf der Basis von metalloxidbeschichteten Glimmer- und Metallpigmenten und bekannten goniochromatischen Glanzpigmenten verwenden.

### Beispiele

### Herstellung und Anwendung von erfindungsgemäßen Glanzpigmenten

Zur Beurteilung der Koloristik der erhaltenen Pigmente wurden jeweils 0,4 g Pigment in 3,6 g eines Polyester-Mischlacks mit 21 Gew.-% Feststoffanteil eingerührt und 2 min in einem Red Devil® dispergiert. Mit einer Rakel (200 µm Naßfilmdicke, einfache Rakelung) wurden anschließend Abzüge der pigmentierten Lacke auf einem schwarzweißen Karton angefertigt. Die Messung der CIELAB-Werte erfolgte nach dem Trocknen des Films mit einem Gonio-Spektralphotometer Multiflash (Fa. Optronik) bei einer Winkeldifferenz von 20° bis 115° zum Glanzwinkel über schwarzem Untergrund. Die Angaben der Farbwerte beziehen sich auf die Normlichtart D65. L entspricht der Helligkeit, a* dem Rot- bzw. Grünanteil und b* dem Blau- bzw. Gelbanteil, H ist der Farbwinkel und C das Chroma. Bei dieser Meßanordnung wird nur ein Teil des Farbenspiels, nämlich im wesentlichen die Farbe der Lackierung in Aufsicht, erfaßt.

### Beispiel 1

a) 20 kg eines kupferfarbenen, mit Aluminium und Mangan dotierten, plättchenförmigen Eisen(III)oxidpigments (mittlerer Teilchendurchmesser 18 µm; Paliocrom® Kupfer L3000, BASF) wurden in einem 1,5 m³-Rührkessel in einem Gemisch aus 305 l Isopropanol, 80 kg Wasser und 8 kg einer 25 gew.-%igen wäßrigen Ammoniaklösung unter Rühren auf 60°C erhitzt. Dann wurden ein Gemisch aus 125 kg Tetraethoxysilan und 125 kg Isopropanol und parallel dazu 28,1 kg einer 3 gew.-%igen wäßrigen Ammoniaklösung zudosiert. Das Fortschreiten der Beschichtung wurde durch regelmäßige Entnahme von Proben verfolgt. Nach einer Nachrührzeit von 2 h und Abkühlen der Suspension wurde das Produkt abfiltriert, mit Wasser gewaschen und unter vermindertem Druck bei 80°C getrocknet.
   Das getrocknete SiO₂-beschichtete Pigment zeigte an der Luft in Aufsicht eine orange Interferenzfarbe, die in Schrägsicht nach Gold abkippte.
b) 1 kg des SiO₂-beschichteten und getrockneten Produkts wurde in einem Wirbelschichtreaktor unter Fluidisierung mit insgesamt 1800 l/h Stickstoff auf 200°C erhitzt. Dann wurden ein Teil der Wirbelgase (400 l/h) über eine auf 50°C temperierte Wasservorlage und ein weiterer Teil der Wirbelgase (400 l/h) über eine auf 120°C temperierte Vorlage mit einem Gemisch von Titantetraethanolat und Titantetraisopropanolat (Molverhältnis 1:1, Titanat IPET, Fa. Hüls) geleitet. Innerhalb von ca. 8 h wurden so 150 ml des Titanalkoholatgemisches portionsweise in den Wirbelschichtreaktor überführt und zu sich auf den Pigmentplättchen abscheidendem TiO₂ umgesetzt.

Das erhaltene Pigment hatte einen Siliciumgehalt von 26,5 Gew.-% und einen Titangehalt von 2,1 Gew.-%. Eine elektronenmikroskopische Untersuchung (TEM-Schnitt) ergab eine gemometrische SiO₂-Schichtdicke von ca. 400 nm und eine geometrische TiO₂-Schichtdicke von ca. 35 nm. Im Lack appliziert, zeigte das Pigment ein winkelabhängiges Farbenspiel von blaustichig Rot nach Gold auf hohem Helligkeitsniveau.

Farbmetrische Daten des erhaltenen Pigments:

| Meßwinkel in ° | L | a* | b* | C | H |
|---|---|---|---|---|---|
| 20 | 78,99 | 51,87 | -6,64 | 52,29 | 352,7 |
| 25 | 67,98 | 47,39 | -3,21 | 47,5 | 356,1 |
| 35 | 50,27 | 37,83 | 4,17 | 38,06 | 6,29 |
| 45 | 38,74 | 31,14 | 9,93 | 32,69 | 17,69 |
| 55 | 31,62 | 27,58 | 13,63 | 30,77 | 26,3 |
| 65 | 26,11 | 25,26 | 16,2 | 30,01 | 32,68 |
| 75 | 24,98 | 24,9 | 16,53 | 29,89 | 33,58 |
| 115 | 21,99 | 25,1 | 18,66 | 31,27 | 36,62 |

### Beispiel 2

1 kg des SiO₂-beschichteten und getrockneten Produkts aus Beispiel la) wurde analog Beispiel 1b) im Wirbelschichtreaktor unter Verwendung von 300 ml der Titanalkoholatgemisches mit TiO₂ beschichtet.

Das erhaltene Pigment hatte einen Siliciumgehalt von 24,2 Gew.-% und einen Titangehalt von 5,7 Gew.-%. Eine elektronenmikroskopische Untersuchung (TEM-Schnitt) ergab eine geometrische SiO₂-Schichtdicke von ca. 400 nm und eine geometrische TiO₂-Schichtdicke von ca. 75 nm. Im Lack appliziert, zeigte das Pigment ein winkelabhängiges Farbenspiel von schwach Blau über kräftig Violett nach Gold auf hohem Helligkeitsniveau.

Farbmetrische Daten des erhaltenen Pigments:

| Meßwinkel in ° | L | a * | b * | C | H |
|---|---|---|---|---|---|
| 20 | 80,39 | 43,8 | -19,43 | 47,92 | 336,08 |
| 25 | 69,86 | 37,43 | -13,35 | 39,74 | 340,36 |
| 35 | 53,05 | 27,15 | -1,35 | 27,18 | 357,16 |
| 45 | 42,17 | 22,32 | 6,71 | 23,3 | 16,7 |
| 55 | 35,49 | 20,76 | 11,05 | 23,52 | 28,02 |
| 65 | 30,16 | 20,15 | 13,27 | 24,13 | 33,35 |
| 75 | 29,05 | 19,98 | 13,47 | 24,1 | 33,99 |
| 115 | 26,09 | 19,74 | 14,29 | 24,37 | 35,9 |

### Beispiel 3

75 g des Pigments aus Beispiel 2 wurden in einem Drehkugelofen durch 30 minütiges Überleiten von 10 l/h Stickstoff inertisiert und gleichzeitig auf 350°C erhitzt. Dann wurden dem Inertgasstrom 5 l/h Wasserstoff zugemischt. Nach 10 min wurde die Temperatur auf 400°C erhöht. Anschließend wurde der Wasserstoffanteil auf 10 l/h erhöht und der Stickstoffanteil auf 5 l/h erniedrigt. Nach 1 h wurden schließlich 15 l/h Wasserstoff (ohne Stickstoffstrom) über das Pigment geleitet. Nach ca. 5 h wurde der Wasserstoffstrom abgestellt, und das Pigment wurde unter einem Stickstoffstrom von 15 l/h auf Raumtemperatur abgekühlt.

Das reduzierte Pigment hatte einen Siliciumgehalt von 24,8 Gew-%, einen Titangehalt von 5,9 Gew.-% und einen Eisen(II)gehalt von 11,2 Gew.-% (Gesamteisen 22,1 Gew.-%). Im Lack appliziert, zeigte das Pigment ein kräftiges winkelabhängiges Farbenspiel von Blau nach Violett.

Farbmetrische Daten des erhaltenen Pigments:

| Meßwinkel in ° | L | a* | b* | C | H |
|---|---|---|---|---|---|
| 20 | 81,44 | 42,69 | -18,61 | 46,57 | -23,56 |
| 25 | 71,86 | 36,39 | -13,5 | 38,82 | -20,35 |
| 35 | 55,37 | 26,38 | -2,59 | 26,5 | -5,6 |
| 45 | 44,06 | 21,67 | 5,36 | 22,32 | 13,89 |
| 55 | 36,82 | 20,35 | 10,11 | 22,72 | 26,41 |
| 65 | 30,88 | 20,14 | 12,97 | 23,95 | 32,77 |
| 75 | 29,77 | 19,98 | 13,29 | 24 | 33,64 |
| 115 | 26,4 | 20,14 | 14,33 | 24,72 | 35,44 |

## Patentansprüche

1. Goniochromatische Glanzpigmente auf der Basis von mehrfach beschichteten Eisenoxidplättchen, die mindestens ein Schichtpaket aus
A) einer farblosen Beschichtung mit einem Brechungsindex n ≤ 1,8 und
B) einer auf die Beschichtung (A) folgenden farblosen Beschichtung mit einem Brechungsindex n ≥ 2,0
aufweisen.

2. Glanzpigmente nach Anspruch 1, bei denen die Eisenoxidplättchen im wesentlichen aus α-Eisen(III)oxid oder Magnetit, die mit Silicium, Aluminium und/oder Mangan dotiert sein können, bestehen.

3. Glanzpigmente nach Anspruch 1 oder 2, bei denen die Eisenoxidplättchen mittlere größte Durchmesser von ≤ 50 µm aufweisen.

4. Glanzpigmente nach den Ansprüchen 1 bis 3, bei denen die Beschichtung (B) eine optische Schichtdicke von ≤ 100 nm hat.

5. Glanzpigmente nach den Ansprüchen 1 bis 4, bei denen die Beschichtung (A) im wesentlichen aus Siliciumoxid, Siliciumoxidhydrat, Aluminiumoxid und /oder Aluminiumoxidhydrat besteht.

6. Glanzpigmente nach den Ansprüchen 1 bis 5, bei denen die Beschichtung (B) im wesentlichen aus Titandioxid, Titanoxidhydrat, Zirkoniumdioxid, Zirkoniumoxidhydrat, Zinndioxid, Zinnoxidhydrat, Zinkoxid, Zinkoxidhydrat und/oder Zinksulfid besteht.

7. Glanzpigmente nach den Ansprüchen 1 bis 6, die nur ein Schichtpaket (A) + (B) enthalten.

8. Verfahren zur Herstellung von Glanzpigmenten gemäß den Ansprüchen 1 bis 7, **dadurch gekennzeichnet, daß** man die Beschichtungen (A) und (B) unabhängig voneinander entweder naßchemisch durch hydrolytische Zersetzung organischer oder anorganischer Metallverbindungen oder durch Gasphasenzersetzung flüchtiger, organischer oder anorganischer Metallverbindungen auf die Eisenoxidplättchen aufbringt.

9. Verfahren zur Herstellung von Glanzpigmenten gemäß Anspruch 1, bei denen das Substrat im wesentlichen aus Magnetitplättchen besteht, **dadurch gekennzeichnet, daß** man
a) Eisen(III)oxidplättchen zunächst mit den Beschichtungen (A) und (B) belegt und die beschichteten Plättchen anschließend bei 150 bis 600°C mit Wasserstoff behandelt oder
b) die Eisen(III)oxidplättchen zunächst bei 150 bis 600°C mit einem reduzierenden Gas behandelt und die erhaltenen Magnetitplättchen anschließend mit den Beschichtungen (A) und (B) belegt.

10. Verwendung von Glanzpigmenten gemäß den Ansprüchen 1 bis 7 zur Einfärbung von Lacken, Druckfarben, Tinten, Kunststoffen, Gläsern, keramischen Produkten und Zubereitungen der dekorativen Kosmetik.

## Claims

1. Goniochromatic luster pigments based on multiply coated iron oxide platelets comprising at least one layer packet comprising
A) a colorless coating having a refractive index n ≤ 1.8, and
B) a colorless coating having a refractive index n ≥ 2.0 and applied subsequently to said coating (A).

2. Luster pigments as claimed in claim 1, wherein said iron oxide platelets consist essentially of α-iron(III) oxide or magnetite, which each may be doped with silicon, aluminum and/or manganese.

3. Luster pigments as claimed in claim 1 or 2, wherein said iron oxide platelets have mean largest diameters of ≤ 50 µm.

4. Luster pigments as claimed in any of claims 1 to 3, wherein said coating (B) has an optical layer thickness of ≤ 100 nm.

5. Luster pigments as claimed in any of claims 1 to 4, wherein said coating (A) consists essentially of silicon oxide, silicon oxide hydrate, aluminum oxide and/or aluminum oxide hydrate.

6. Luster pigments as claimed in any of claims 1 to 5, wherein said coating (B) consists essentially of titanium dioxide, titanium oxide hydrate, zirconium dioxide, zirconium oxide hydrate, tin dioxide, tin oxide hydrate, zinc oxide, zinc oxide hydrate and/or zinc sulfide.

7. Luster pigments as claimed in any of claims 1 to 6, comprising just one layer packet (A) + (B).

8. A process for producing luster pigments as claimed in any of claims 1 to 7, **characterized in that** it comprises applying said coatings (A) and (B) to said iron oxide platelets independently of each other either wet-chemically by hydrolytic decomposition of organic or inorganic metal compounds or by gas phase decomposition of volatile, organic or inorganic metal compounds.

9. A process for producing luster pigments as claimed in claim 1 wherein the substrate consists essentially of magnetite platelets, **characterized in that** it comprises
a) coating iron(III) oxide platelets initially with said coatings (A) and (B) and subsequently treating the coated platelets with hydrogen at from 150 to 600°C, or
b) initially treating said iron(III) oxide platelets with a reducing gas at from 150 to 600°C and subsequently coating the magnetite platelets obtained with said coatings (A) and (B).

10. The use of luster pigments as claimed in any of claims 1 to 7 for coloring coatings, inks, including printing inks, plastics, glasses, ceramic products and decorative cosmetic preparations.

## Revendications

1. Pigments brillants goniochromatiques à base d'oxyde de fer sous forme de plaquettes portant des couches multiples, présentant au moins un ensemble de couches constitué
A) d'un revêtement incolore présentant un indice de réfraction n ≤ 1,8 et
B) d'un revêtement incolore appliqué sur le revêtement (A) et présentant un indice de réfraction n ≥ 2,0.

2. Pigments brillants selon la revendication 1, qui présentent des plaquettes d'oxyde de fer constituées pour l'essentiel d'oxyde de fer α (III) ou de magnétite pouvant être dopés de silicium, d'aluminium et/ou de manganèse.

3. Pigments brillants selon la revendication 1 ou 2, qui présentent des plaquettes d'oxyde de fer présentant un diamètre maximal moyen de ≤ 50 µm.

4. Pigments brillants selon les revendications 1 à 3, qui présentent un revêtement (B) présentant une épaisseur de couche optique de ≤ 100 nm.

5. Pigments brillants selon les revendications 1 à 4, qui présentent un revêtement (A) constitué pour l'essentiel d'oxyde de silicium, d'oxyde de silicium hydraté, d'oxyde d'aluminium et/ou d'oxyde d'aluminium hydraté.

6. Pigments brillants selon les revendications 1 à 5, qui présentent un revêtement (B) constitué pour l'essentiel d'oxyde de titane, d'oxyde de titane hydraté, d'oxyde de zirconium, d'oxyde de zirconium hydraté, d'oxyde d'étain, d'oxyde d'étain hydraté, d'oxyde de zinc, d'oxyde de zinc hydraté, et/ou de sulfure de zinc.

7. Pigments brillants selon les revendications 1 à 6, qui ne présentent qu'un ensemble de couches (A)+(B).

8. Procédé pour la préparation des pigments brillants selon les revendications 1 à 7, **caractérisé en ce que** l'on applique les revêtements (A) et (B) sur les plaquettes d'oxyde de fer, indépendamment l'un de l'autre soit à l'aide d'un procédé chimique par voie humide au moyen d'une décomposition hydrolytique de composés métalliques organiques ou inorganiques, soit au moyen d'une décomposition en phase gazeuse de composés métalliques volatils, organiques ou inorganiques.

9. Procédé pour la préparation des pigments brillants selon la revendication 1, présentant un substrat constitué pour l'essentiel de plaquettes de magnétite, **caractérisé en ce que** l'on
a) applique, dans un premier temps, les revêtements (A) et (B) sur les plaquettes d'oxyde de fer(III) et on traite, dans un deuxième temps, les plaquettes revêtues, avec de l'hydrogène à une température comprise entre 150°C et 600°C, ou
b) traite, dans un premier temps, les plaquettes d'oxyde de fer(III) avec un gaz réducteur à une température comprise entre 150°C et 600°C et que l'on applique, dans un deuxième temps, les revêtements (A) et (B) sur les plaquettes de magnétite obtenus.

10. Mise en oeuvre des pigments brillants selon les revendications 1 à 7 pour la coloration des laques, des encres d'impression, des encres, des matières synthétiques, des verres, des produits à base de céramique et des préparations de décoration esthétique.
